# EUROPÄISCHE PATENTSCHRIFT

(11) **EP 0 570 869 B1**
(45) Veröffentlichungstag und Bekanntmachung des Hinweises auf die Patenterteilung: **17.12.1997**
(21) Anmeldenummer: 93107918.0
(22) Anmeldetag: 14.05.1993
(51) Int. Cl.: C07F 9/46

(54) **Phosphinigsäure-arylester**
Aryl esters of phosphinous acids
Esters aryliques d'acides phosphineux

(30) Priorität: 21.05.1992 DE 4216882
(43) Veröffentlichungstag der Anmeldung: 24.11.1993
(73) Patentinhaber: HOECHST AKTIENGESELLSCHAFT, 65926 Frankfurt am Main (DE)
(72) Erfinder: Regnat, Dieter, Dr., W-6000 Frankfurt/Main (DE); Kleiner, Hans-Jerg, Dr., W-6242 Kronberg/Ts. (DE)

(56) Entgegenhaltungen:
- EP-A- 0 524 640
- JUSTUS LIEBIGS ANNALEN DER CHEMIE Nr. 5 , 1974 , WEINHEIM DE Seiten 751 - 764 HANSS-JERG KLEINER 'Herstellung und Umsetzungen von Dimethylphosphinoxid'

## Beschreibung

Die vorliegende Erfindung betrifft neue Dialkyl- und Alkyl-arylphosphinigsäure-arylester und ein Verfahren zu deren Herstellung.

Dialkyl- und Alkyl-aryl-phosphinigsäure-arylester siehe z.B. Justus Liebigs Annalen der Chemie Nr.5, 1974, Seiten 751-764 sind technisch wertvolle Verbindungen, die beispielsweise als Ausgangsstoffe zur Synthese von sekundären Phosphanoxiden Verwendung finden, welche als Ausgangsprodukte für Phosphanliganden in Katalysatorsystemen Verwendung finden.

Phosphinigsäureester können aus Phosphinigsäure-halogeniden durch Umsetzung mit Phenol hergestellt werden. Phosphinigsäure-halogenide sind jedoch technisch schwer zugänglich. In der Praxis steht als einziges technisch verfügbares Vorprodukt Diphenylphosphinigsäurechlorid zur Verfügung.

Bei der Synthese von Phosphinigsäureestern durch Umsetzung von Phosphorigsäureesterdichloriden und Grignard-Reagenzien läuft als ausbeutevermindernde Nebenreaktion der Austausch des Alkoholatrestes OR durch die Grignard-Verbindung ab, so daß selbst in den günstigsten Fällen die erzielten Ausbeuten 60 % nicht übersteigen (Houben-Weyl, K. Sasse, Bd. 12/1, S. 210).

Darüber hinaus bestand in der Literatur ein Vorurteil dahingehend, daß die Umsetzung von Phosphorigsäureesterdihalogeniden mit Organomagnesiumbromiden zunächst immer zu unlöslichen Komplexverbindungen führt, die erst durch Zugabe weiterer Hilfsstoffe, beispielsweise Pyridin, zerlegt werden müssen, um eine Isolierung der erwünschten Phosphinigsäureester zu ermöglichen.

Aufgabe der vorliegenden Erfindung war es daher, Dialkyl- und Alkyl-arylphosphinigsäurearylester in einfacher Weise in möglichst hohen Ausbeuten zu gewinnen.

Es wurde nun gefunden, daß Dialkyl- und Alkyl-aryl-phosphinigsäure-2,4-di-tert.-butylphenylester überraschenderweise mit guten Ausbeuten durch Umsetzung von Phosphorigsäure-2,4-di-tert.-butylphenylester-dihalogenid mit Alkyl- oder Arylmagnesium-bromiden oder -chloriden hergestellt werden können, wobei Halogenid ebenfalls Chlorid oder Bromid bedeutet.

Gegenstand der Erfindung sind Dialkyl- und Alkyl-aryl-phosphinigsäure-2,4-di-tert.-butylphenylester der Formel (I), 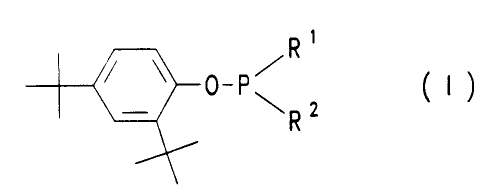 worin R¹ und R² unabhängig voneinander jeweils einen verzweigten, unverzweigten oder cyclischen Alkylrest mit 1 bis 20 Kohlenstoffatomen darstellen, oder
R¹ einen der vorstenend definierten Alkylreste bedeutet und
R² für einen Phenyl- oder Naphthylrest steht, die unsubstituiert sind oder jeweils 1 bis 5 Substituenten tragen, wobei die Substituenten gleich oder verschieden sind und einen nicht-aromatischen C₁-C₁₂-Kohlenwasserstoffrest, einen C₁-C₁₂-Alkoxyrest, C₁-C₁₂-Alkylthiorest, Di-C₁-C₁₂-alkylaminorest oder einen Arylrest oder Aryloxyrest mit jewels 6 bis 12 Kohlenstoffatomen bedeuten.

Bevorzugt im Sinne der Erfindung sind Verbindungen der Formel (I), worin R¹ und R² unabhängig voneinander jeweils einen verzweigten oder unverzweigten Alkylrest mit 1 bis 10, vorzugsweise 2 bis 6, Kohlenstoffatomen oder einen cyclischen Alkylrest mit 6 bis 12, vorzugsweise 6 bis 7, Kohlenstoffatomen bedeuten.

Bevorzugt im Sinne der Erfindung sind weiterhin Verbindungen der Formel (I), in denen
R¹ einen verzweigten oder unverzweigten Alkylrest mit 1 bis 10, vorzugsweise 2 bis 6, Kohlenstoffatomen oder einen cyclischen Alkylrest mit 6 bis 12, vorzugsweise 6 bis 7, Kohlenstoffatomen
   und
R² einen durch 1 bis 3 C₁-C₈-Alkylreste, C₁-C₈-Alkoxyreste, C₁-C₈-Alkylthioreste, Di-C₁-C₈-alkylaminoreste, Phenylreste oder Phenoxyreste substituierten Phenylrest, einen unsubstituierten Naphthylrest oder einen durch 1 bis 3 C₁-C₈-Alkylreste, C₁-C₈-Alkoxyreste, C₁-C₈-Alkylthioreste, Di-C₁-C₈-alkylaminoreste, Phenylreste oder Phenoxyreste substituierten Naphthylrest bedeuten.

Von besonderem Interesse sind Verbindungen der Formel (I), worin
R¹ und R² unabhängig voneinander jewels Methyl, Ethyl, Propyl, Butyl oder Cyclohexyl bedeuten.

Von besonderem Interesse sind weiterhin Verbindungen der Formel (I) worin
R¹ Methyl, Ethyl, Propyl, Butyl oder Cyclohexyl und
R² einen Tolyl-, Xylyl-, Mesityl-, 2,4,5-Trimethylphenyl-, 2,4,6-Tri-tert.-butylphenyl-, 2,4-Di-tert.-octylphenyl-, Biphenyl-, Naphthyl-, Methylnaphthyl-, Dimethylnaphthyl- oder Trimethylnaphthyl-Rest bedeuten.

Von besonderem Interesse sind folgende Verbindungen der Formel (I):
Dimethylphosphinigsäure-2,4-di-tert-butylphenylester,
Diethylphosphinigsäure-2,4-di-tert-butylphenylester,
Dipropylphosphinigsäure-2,4-di-tert-butulphenylester,
Diisopropylphosphinigsäure-2,4-di-tert-burylphenylester,
Dibutylphosphinigsäure-2,4-di-tert-butylphenylester,
Di-(1-methylpropyl)phosphinigsäure-2,4-di-tert-butylphenylester,
Di-(2-methylpropyl)phosphinigsäure-2,4-di-tert-butylphenylester,
Dicyclohexylphosphinigsäure-2,4-di-tert-butylphenylester,
2,4,6-Trimethylphenyl-isopropyl-phosphinigsäure-2,4-di-tert-butylphenylester,
2,4,6-Trimethylphenyl-(2-methylpropyl)-phosphinigsäure-2,4-di-tert-butylphenylester,
2,4,6-Trimethylphenyl-cyclohexyl-phosphinigsäure-2,4-di-tert-butylphenylester,
1-Naphthyl-isopropyl-phosphinigsäure-2,4-di-tert-butylphenylester,
1-Naphthyl-(2-methylpropyl)-phosphinigsäure-2,4-di-tert-butylphenylester und
1-Naphthyl-cyclohexyl-phosphinigsäure-2,4-di-tert-butylphenylester.

Gegenstand der Erfindung ist auch ein Verfahren zur Herstellung der Phosphinigsäure-2,4-di-tert-butylphenylester der Formel (I), worin R¹ und R² die oben angegebenen Bedeutungen haben, das dadurch gekennzeichnet ist, daß man
a) im Falle, daß R¹ und R² voneinander verschieden sind, zunächst in einem ersten Schritt Phosphorigsäure-2,4-di-tert.-butylphenylester-dihalogenid mit einer Grignard-Verbindung der Formel R¹-MgX im molaren Verhältnis von 0,8:1 bis 1,2 : 1, vorzugsweise 1 : 1, wobei R¹ die vorstehend genannten Bedeutungen hat, Halogenid Chord oder Bromid bedeutet und X ein Halogen mit einem Atomgewicht von mindestens 35 ist, vorzugsweise Chlor oder Brom, insbesondere Brom, unter Bildung eines Phosphonigsäureester-halogenids der Formel (II) umsetzt 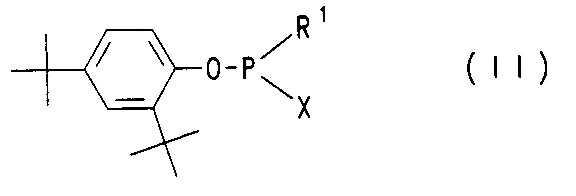 und anschließend in einem zweiten Schritt die Verbindung der Formel (II) mit einer Grignard-Verbindung der Formel R²-MgX im molaren Verhältnis von 0,8 : 1 bis 1,2 : 1, vorzugsweise 1:1, umsetzt, wobei R² eine der vorstehend genannten, aber von R¹ verschiedenen Bedeutungen hat, oder
b) im Falle, daß R¹ und R² die gleiche Bedeutung haben, Phosphorigsäure-2,4-di-tert.-butylphenylester-dihalogenid mit einer Grignard-Verbindung R¹-MgX im molaren Verhältnis von 0,8 : 2 bis 1,2 : 2, vorzugsweise 1 : 2, umsetzt.

Die Herstellung der Grignard-Verbindungen R¹-MgX oder R²-MgX erfolgt in an sich bekannter Weise, indem man ein Kohlenwasserstoffhalogenid R¹-X oder R²-X unter Grignard-Bedingungen, zweckmäßigerweise unter inniger Durchmischung, mit einer mindestens stöchiometrischen Menge an feinteiligem Magnesium und vorzugsweise in einem aprotischen, organischen Lösungsmittel, beispielsweise einem Ether, insbesondere Diethyl-, Dipropyl- oder Diisopropylether, Ethylenglycoldimethyl-, Ethylenglycoldiethyl-, Diethylenglycoldimethyl-, Diethylenglycoldiethyl-oder Methyl-tert.-butylether, Dioxan oder Tetrahydrofuran, umsetzt. Da die Grignard-Verbindungen hydrolyse- und oxidationsempfindlich sind, kann es zweckmäßig sein, unter Schutzgasatmosphäre zu arbeiten. Ein solches Vorgehen ist jedoch für das Gelingen der Reaktion keineswegs zwingend. As Schutzgas geeignet sind Stickstoff oder Argon. Die Reaktionstemperatur liegt im allgemeinen zwischen 20 und 125°C, bevorzugt jedoch zwischen 30 und 70°C. Es kann vorteilhaft sein, während der Grignardierung für eine gute Verwirbelung zu sorgen, beispielsweise durch Einwirkung von Ultraschall.

Für den ersten Reaktionsschritt der Verfahrensvariante a) wird as Kohlenwasserstoffhalogenid R¹-X bevorzugt ein solches eingesetzt, bei dem R¹ ein mit mindestens einem der vorstehend genannten Substituenten substituierter Phenylrest ist, wobei sich ein Substituent bevorzugt in 2-Position befindet, oder ein unsubstituierter oder mit mindestens einem der vorstehend genannten Substituenten substituierter Naphthylrest ist.

Zur Herstellung der Verbindung der Formel (II) ist es zweckmäßig, die Lösung oder Suspension der Grignard-Verbindung R¹-MgX einer Lösung von Phosphorigsäure-2,4-di-tert.-butylphenylester-dihalogenid, vorteilhaft bei einer Temperatur unterhalb von 0°C, unter lebhafter Durchmischung portionsweise in kleinen Mengen oder kontinuierlich zuzugeben.

Zur Herstellung der Verbindungen der Formel (I) in Variante b) sowie im zweiten Schritt der Variante a) können die Reaktionspartner in beliebiger Weise zusammengegeben werden. Es ist aber technisch vorteilhaft, be der Variante b) das Phosphorigsäure-2,4-di-tert.-butylphenylester-dihalogenid oder im zweiten Schritt der Variante a) die Verbindung der Formal (II) der Lösung oder Suspension der jeweiligen Grignard-Verbindung portionsweise in kleinen Mengen oder kontinuierlich zuzugeben, wenn die Reste R¹ und R² die vorstehend genannten Bedeutungen außer primären Alkylgruppen haben.

Im Falle, daß R¹ und R² primäre Alkylgruppen bedeuten, ist as vorteilhaft, bei der Variante b) die Lösung oder Suspension der Grignard-Verbindung einer Lösung von Phosphorigsäure-2,4-di-tert.-butylphenylester-dihalogenid oder im zweiten Schritt der Variante a) der Lösung der Verbindung der Formal (II), vorteilhaft bei einer Temperatur unterhalb 0°C, unter lebhafter Durchmischung zuzugeben.

Für den ersten und zweiten Schritt der Varianta a) sowie für die Variante b) kommen als Verdünnungsmittel inerte, aprotische Lösungsmittel, beispielsweise eine aliphatische Kohlenwasserstofffraktion, Hexan, Cyclohexan, Methylcyclohexan, Toluol, Xylole oder einer der vorstehend genannten Ether oder Gemische dieser Lösungsmittel in Frage. Die Reaktionstemperatur liegt bei diesen Reaktionsschritten zwischen -30° und +50°C, vorzugsweise aber zwischen -20° und +20°C. Die Umsetzungen verlaufen in der Regal exotherm; demantsprechend kann es zweckmäßig sein, den Reaktionsverlauf durch Kühlung zu steuern. Die günstigsten Ergebnisse werden erzielt, wenn man die Reaktionspartner in stöchiometrischen Mengen einsetzt. Es ist jedoch auch möglich, einen Reaktionspartner im Überschuß einzusetzen; im allgemeinen sind damit aber keine besonderen Vorteile verbunden. Zweckmäßig wird gerührt, bis die Umsetzung vollständig ist, und anschließend vom ausgefallenen Magnesiumhalogenid abgetrennt. Die Lösungsmittel können aus dem Filtrat in üblicher Weise, vorteilhaft destillativ, insbesondere unter vermindertem Druck, entfernt werden.

Die Verbindungen der Formel (I) lassan sich nach üblichen Verfahren, beispielsweise durch Destillation oder Kristallisation, aus den Rohprodukten isolieren.

Gegenstand der vorliegenden Erfindung ist ferner die Verwendung der erfindungsgemäßen Dialkyl- und Alkylaryl-phosphinigsäure-arylester als Ausgangsprodukte für die Herstellung von sekundären Phosphanoxiden durch Hydrolyse in Wasser oder einem wäßrig-organischen Medium. Eine Reinigung dieser Ausgangsprodukte für den genannten Zweck ist nicht erforderlich. Sekundäre Phosphanoxide sind Zwischenprodukte zur Herstellung von Flammhemmitteln, Metallextraktionsmitteln sowie Ausgangsprodukte zur Herstellung von tertiären Phosphanoxidan, deren Desoxygenierung zu tertiären Phosphanen führt, die in vielfältiger Weise als Katalysatoren einsetzbar sind.

### Beispiele

In den nachfolgenden Beispielen wurden die erfindungsgemäßen Verbindungen der Formal (I) entsprechend den nachfolgend aufgeführten Verfahrensvarianten a) oder b) hergestellt:

### Verfahrensvariante a):

Unter Stickstoffatmosphäre und Feuchtigkeitsausschluß wurde aus 150 mmol der Organobromverbindung R¹-Br und 150 mmol (3,65 g) Magnesiumspänan in 90 ml Tetrahydrofuran die entsprechende Grignardverbindung R¹ -MgBr hergestellt. Anschließend wurde die erhaltene Lösung oder Suspension der metallorganischen Verbindung innerhalb von 30 bis 40 Minuten unter lebhaftem Rühren bei einer Temperatur von -20° bis -10°C zu einer Lösung von 150 mmol (46,1 g) Phosphorigsäure-2,4-di-tert-butylphenylester-dichlorid in 120 ml Tetrahydrofuran/n-Heptan (1 : 1) zudosiert. Dann ließ man die Reaktionsmischung auf etwa 20°C erwärmen und rührte zur Vervollständigung der Reaktion noch 3 Stunden. Unter Stickstoffatmosphäre und Feuchtigkeitsausschluß wurde aus 150 mmol der Organobromverbindung R²-Br und 150 mmol (3,65 g) Magnesiumspänen in 90 ml Tetrahydrofuran die entsprechende Grignard-Verbindung R²-MgBr hergestellt. Anschließend wurde die erhaltene Lösung oder Suspension der metallorganischen Verbindung innerhalb von 30 bis 40 Minuten unter lebhaftem Rühren bei einer Temperatur von -20° bis -10°C zur Lösung des zuvor hergestellten Phosphonigsäure-2,4-di-tert-butylphenylester-chlorids zudosiert. Dann ließ man die Reaktionsmischung auf etwa 20°C erwärmen und rührte zur Vervollständigung der Reaktion noch 3 Stunden. Nach Filtration vom ausgefallenen Magnesiumsalz, das mit etwa 50 ml Petrolether nachgewaschen wurde, wurde das Lösungsmittel zunächst bei etwa 0,02 bar und dann im Hochvakuum abdestilliert. Man erhielt farblose oder gelbe Öle, die gegebenenfalls im Hochvakuum destilliert wurden.

### Verfahrensvariante b):

Unter Stickstoffatmosphäre und Feuchtigkeitsausschluß wurde aus 300 mmol Organobromverbindung und 300 mmol (7,3 g) Magnesiumspänen in 180 ml Tetrahydrofuran die entsprechende Grignardverbindung hergestellt. Anschließend wurde die erhaltene Lösung oder Suspension der metallorganischen Verbindung innerhalb von 30 bis 40 Minuten unter lebhaftem Rühren bei einer Temperatur von -20° bis -10°C zu einer Lösung von 150 mmol (46,1 g) Phosphorigsäure-2,4-di-tert-butylphenylester-dichlorid in 120 ml Tetrahydrofuran/n-Heptan (1 : 1) zudosiert. Dann ließ man die Reaktionsmischung auf etwa 20°C erwärmen und rührte zur Vervollständigung der Reaktion noch 3 Stunden. Nach Filtration vom ausgefallenen Magnesiumsalz, das mit etwa 50 ml Petrolether nachgewaschen wurde, wurde das Lösungsmittel zunächst bei etwa 0,02 bar und dann im Hochvakuum abdestilliert. Man erhielt farblose oder gelbe Öle, die gegebenenfalls im Hochvakuum destilliert wurden.

Die Ausbeute der erfindungsgemäßen Verbindungen wurde jeweils durch ³¹P-NMR-Spektroskopie ermittelt und lag im allgemeinen zwischen 70 und 90 %. In den angegebenen Fällen wurde zur Charakterisierung das Produktes eine Destillation durchgeführt.

### 1) Dimethylphosphinigsäure-2,4-di-tert.-butylphenylester (nach Variante b)

Ausgehend von 15,2 g (300 mmol) Chlormethan erhielt man 40 g eines gelben Öles mit einem Gehalt von 75 % an Dimethylphosphinigsäure-2,4-di-tert.-butylphenylester.
³¹P-NMR: δ_{[D]-Chloroform} = 117,4 ppm

### 2) Diethylphosphinigsäure-2,4-di-tert-butylphenylester (nach Variante b)

Ausgehend von 32,70 g (300 mmol) Bromethan erhielt man 41 g eines blaßgelben Öles mit einem Gehalt von 79 % an Diethylphosphinigsäure-2,4-tert.-butylphenylester.
³¹P-NMR: δ_{[D]-Chloroform} = 130,8 ppm

### 3) Dipropylphosphinigsäure-2,4-di-tert-butylphenylester (nach Variante b)

Ausgehend von 36,90 g (300 mmol) 1-Brompropan erhielt man 48 g eines blaßgelben Öles mit einem Gehalt von 83% an Dipropylphosphinigsäure-2,4-di-tert-butylphenylester.
³¹P-NMR: δ_{[D]-Chloroform} = 125,4 ppm

### 4) Diisopropylphosphinigsäure-2,4-di-tert-butylphenylester (nach Variante b)

Ausgehend von 36,90 g (300 mmol) 2-Brompropan wurde die Grignard-Verbindung hergestellt. In Abänderung der allgemeinen Verfahrensvariante b) wurde das Phosphorigsäure-2,4-di-tert-butylphenylester- dichlorid zu der Suspension der Grignard-Verbindung gegeben. Man erhielt 48 g eines blaßgelben Öles mit einem Gehalt von 90 - 95 % an Diisopropylphosphinigsäure-2,4-di-tert-butylphenylester.
³¹P-NMR: δ_{[D]-Chloroform} = 137,9 ppm. Destillation bei 0,4 bis 0,5 mbar ergab 43,2 g (90 %) der vorstehenden Verbindung mit einem Siedepunkt von 136°C als farbloses Öl.

### 5) Dibutylphosphinigsäure-2,4-di-tert-butylphenylester (nach Variante b)

Ausgehend von 41,10 g (300 mmol) 1-Brombutan erhielt man 52 g eines blaßgelben Öles mit einem Gehalt von 71 % an Dibutylphosphinigsäure-2,4-di-tert-butylphenylester.
³¹P-NMR: δ_{[D]-Chloroform} = 126,5 ppm

### 6) Di-(1-methylpropyl)phosphinigsäure-2,4-di-tert-butylphenylester (nach Variante b)

Ausgehend von 41,10 g (300 mmol) 2-Brombutan wurde die Grignard-Verbindung hergestellt. In Abänderung der allgemeinen Verfahrensvariante b) wurde Phosphorigsäure-2,4-di-tert.-butylphenyl-ester-dichlorid zu der Suspension der Grignard-Verbindung dosiert. Man erhielt 51,5 g eines blaßgelben Öles mit einem Gehalt von 75 % an Di-(1-methylpropyl)phosphinigsäure-2,4-di-tert-butylphenylester.
³¹P-NMR: δ_{[D]-Chloroform} = 120 - 140 ppm, breit. Destillation bei 0,4 bis 0,5 mbar ergab 34,5 g (67 %) der vorstehenden Verbindung mit einem Siedepunkt von 154 bis 156°C as farbloses Öl.

### 7) Di-(2-methylpropyl)phosphinigsäure-2,4-di-tert-butylphenylester (nach Variante b)

Ausgehend von 41,10 g 1-Brom-2-methylpropan wurde die Grignard-Verbindung hergestellt. In Abänderung der allgemeinen Verfahrensvariante b) wurde Phosphorigsäure-2,4-di-tert.-butylphenylester-dichlorid zu der Suspension der Grignard-Verbindung dosiert. Man erhielt 52 g eines blaßgelben Öles mit einem Gehalt von 70 % an Di-(2-methylpropyl)phosphinigsäure-2,4-di-tert-butylphenylester.
³¹P-NMR: δ_{[D]-Chloroform} = 121,8 ppm. Destillation bei 0,4 bis 0,5 mbar ergab 35,3 g (68 %) der vorstehenden Verbindung mit einem Siedepunkt von 144 bis 146°C als farbloses Öl.

### 8) Dicyclohexylphosphinigsäure-2,4-di-tert.-butylphenylester (nach Variante b)

Ausgehend von 48,12 g (300 mmol) Bromcyclohexan wurde die Grignard-Verbindung hergestellt. In Abänderung der allgemeinen Verfahrensvariante b) wurde Phosphorigsäure-2,4-di-tert-butylphenylester-dichlorid zu der Suspension der Grignard-Verbindung dosiert. Man erhielt 60 g eines gelben Öles mit einem Gehalt von 71 % an Dicyclohexylphosphinigsäure-2,4-di-tert.-butylphenylester.
³¹P-NMR: δ_{[D]-Chloroform} = 133,3 ppm

### 9) 2,4,6-Trimethylphenyl-isopropyl-phosphinigsäure-2,4-di-tert-butylphenylester (nach Variante a)

Ausgehend von 29,87 g (150 mmol) 1-Brom-2,4,6-trimethylbenzol und 18,45 g (150 mmol) Isopropylbromid erhielt man 59 g eines gelben Öles mit einem Gehalt von 70 % an 2,4,6-Trimethylphenyl-isopropyl-phosphinigsäure-2,4-di-tert-butylphenylester.
³¹P-NMR: δ_{[D]-Chloroform} = 129,0 ppm

### 10) 2,4,6-Trimethylphenyl-2-methylpropyl-phosphinigsäure-2,4-di-tert-butylphenylester (nach Variante a)

Ausgehend von 29,87 g (150 mmol) 1-Brom-2,4,6-trimethylbenzol und 20,55 g (150 mmol) 2-Methylbrompropan erhielt man 61,5 g eines gelben Öles mit einem Gehalt von 76 % an 2,4,6-Trimethylphenyl-2-methylpropyl-phosphinigsäure-2,4-di-tert-butylphenylester.
³¹P-NMR: δ_{[D]-Chloroform} = 121,9 ppm

### 11) 2,4,6-Trimethylphenyl-cyclohexyl-phosphinigsäure-2,4-di-tert-butylphenylester (nach Variante a)

Ausgehend von 29,87 g (150 mmol) 1-Brom-2,4,6-trimethylbenzol und 24,06 g (150 mmol) Bromcyclohexan erhielt man ein gelbes Öl mit einem Gehalt von 67% an 2,4,6-Trimethylphenyl-cyclohexyl-phosphinigsäure-2,4-di-tert-butylphenylester.
³¹P-NMR: δ_{[D]-Chloroform} = 126,3 ppm

### 12) 1-Naphthyl-isopropyl-phosphinigsäure-2,4-di-tert-butylphenylester (nach Variante a)

Ausgehend von 31,05 g (150 mmol) 1-Bromnaphthalin und 18,45 g (150 mmol) Isopropylbromid erhielt man 60,5 g eines gelben Öles mit einem Gehalt von 89 % an 1-Naphthyl-isopropyl-phosphinigsäure-2,4-di-tert-butylphenylester.
³¹P-NMR: δ_{[D]-Chloroform} = 117,1 ppm

### 13) 1-Naphthyl-2-methylpropyl-phosphinigsäure-2,4-di-tert-butylphenylester (nach Variante a)

Ausgehend von 31,05 g (150 mmol) 1-Bromnaphthalin und 20,55 g (150 mmol) 2-Methylbrompropan erhielt man 63 g eines gelben Öles mit einem Gehalt von 79 % an 1-Naphthyl-2-methylpropyl-phosphinigsäure-2,4-di-tert-butylphenylester.
³¹P-NMR: δ_{[D]-Chloroform} = 110,5 ppm

### 14) 1-Naphthyl-cyclohexyl-phosphinigsäure-2,4-di-tert-butylphenylester (nach Variante a)

Ausgehend von 31,05 g (150 mmol) 1-Bromnaphthalin und 24,06 g (150 mmol) Bromcyclohexan erhielt man 66 g eines gelben Öles mit einem Gehalt von 75 % an 1-Naphthyl-cyclohexyl-phosphinigsäure-2,4-di-tert-butylphenylester.
³¹P-NMR: δ_{[D]-Chloroform} = 115,0 ppm

### Anwendungsbeispiele

### Synthese von sekundären Phosphanoxiden:

### 1) Diisopropylphosphanoxid

32,3 g (0,1 mol) Diisopropylphosphinigsäure-2,4-di-tert.-butylphenylester aus Beispiel 2 wurden in 100 ml Acetonitril mit 2,0 g (0,11 mol) Wasser bei 20°C umgesetzt und anschließend 1 Stunde be 70°C gerührt. Man destillierte das Lösungsmittel im Vakuum ab, gab 50 ml Wasser und 100 ml Ethylacetat zu, trennte die Phasen und extrahierte die organische Phase noch zweimal mit je 50 ml Wasser. Die vereinigten wäßrigen Phasen wurden eingedampft und der Rückstand im Vakuum destilliert. Man erhielt 10,0 g (75 %) einer farblosen Flüssigkeit mit einem Siedepunkt von 40 bis 42°C/0,25 mbar.

### 2) Dibutylphosphanoxid

35 g (0,1 mol) Dibutylphosphinigsäure-2,4-di-tert-butylphenylester aus Beispiel 5 wurden in 100 ml Acetonitril mit 2,0 g (0,11 mol) Wasser be 20°C umgesetzt und anschließend 1 Stunde be 70°C gerührt. Man destillierte das Lösungsmittel im Vakuum ab, gab 50 ml Wasser und 100 ml Ethylacetat zu, trennte die Phasen und extrahierte die organische Phase noch zweimal mit je 50 ml Wasser. Die vereinigten wäßrigen Phasen wurden eingedampft und der Rückstand im Vakuum destilliert. Man erhielt 10,2 g (70 %) einer farblosen Flüssigkeit mit einem Siedepunkt von 102 bis 104°C/0,25 mbar.

## Patentansprüche

1. Verbindung der Formel (I) 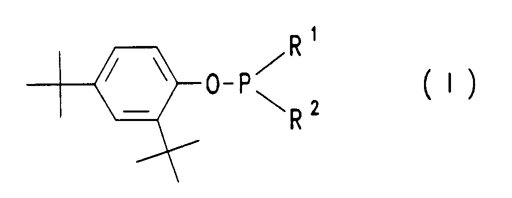 worin R¹ und R² unabhängig voneinander jewels einen verzweigten, unverzweigten oder cyclischen Alkylrest mit 1 bis 20 Kohlenstoffatomen darstellen, oder
R¹ einen der vorstehend definierten Alkylreste bedeutet und
R² für einen Phenyl- oder Naphthylrest steht, die unsubstituiert sind oder jewels 1 bis 5 Substituenten tragen, wobei die Substituenten gleich oder verschieden sind und einen nicht-aromatischen C₁-C₁₂-Kohlenwasserstoffrest, einen C₁-C₁₂-Alkoxyrest, C₁-C₁₂-Alkylthiorest, Di-C₁-C₁₂-alkylaminorest oder einen Arylrest oder Aryloxyrest mit jeweils 6 bis 12 Kohlenstoffatomen bedeuten.

2. Verbindung nach Anspruch 1, dadurch gekennzeichnet, daß
R¹ und R² unabhängig voneinander jewels einen verzweigten oder unverzweigten Alkylrest mit 1 bis 10, vorzugsweise 2 bis 6, Kohlenstoffatomen oder einen cyclischen Alkylrest mit 6 bis 12, vorzugsweise 6 bis 7, Kohlenstoffatomen bedeuten.

3. Verbindung nach Anspruch 1, dadurch gekennzeichnet, daß
R¹ einen verzweigten oder unverzweigten Alkylrest mit 1 bis 10, vorzugsweise 2 bis 6, Kohlenstoffatomen oder einen cyclischen Alkylrest mit 6 bis 12, vorzugsweise 6 bis 7, Kohlenstoffatomen
und
R² einen durch 1 bis 3 C₁-C₈-Alkylreste, C₁-C₈-Alkoxyreste, C₁-C₈-Alkylthioreste, Di-C₁-C₈-alkylaminoreste, Phenylreste oder Phenoxyreste substituierten Phenylrest, einen unsubstituierten Naphthylrest oder einen durch 1 bis 3 C₁-C₈-Alkylreste, C₁-C₈-Alkoxyreste, C₁-C₈-Alkylthioreste, Di-C₁-C₈-Alkylthioreste, Di-C₁-C₈-alkylaminoreste, Phenylreste oder Phenoxyreste substituierten Naphthylrest bedeuten.

4. Verbindung nach Anspruch 1 oder 2, dadurch gekennzeichnet, daß R¹ und R² unabhängig voneinander jewels Methyl, Ethyl, Propyl, Butyl oder Cyclohexyl bedeuten.

5. Verbindung nach Anspruch 1 oder 3, dadurch gekennzeichnet, daß
R¹ Methyl, Ethyl, Propyl, Butyl oder Cyclohexyl und
R² einen Tolyl-, Xylyl-, Mesityl-, 2,4,5-Trimethylphenyl-, 2,4,6-Tri-tert.-butylphenyl-, 2,4-Di-tert.-octylphenyl-, Biphenyl-, Naphthyl-, Methylnaphthyl-, Dimethylnaphthyl-oder Trimethylnaphthyl-Rest bedeuten.

6. Verfahren zur Herstellung einer Verbindung der Formel (I) nach mindestens einem der Ansprüche 1 bis 5, dadurch gekennzeichnet, daß man
a) im Falle, daß R¹ und R² voneinander verschieden sind, zunächst in einem ersten Schritt Phosphorigsäure-2,4-di-tert.-butylphenylester-dihalogenid mit einer Grignard-Verbindung der Formel R¹-MgX im molaren Verhältnis von 0,8 : 1 bis 1,2 : 1, vorzugsweise 1 : 1, wobei R¹ die vorstehend genannten Bedeutungen hat, Halogenid Chlorid oder Bromid bedeutet und X ein Halogen mit einem Atomgewicht von mindestens 35 ist, vorzugsweise Chlor oder Brom, insbesondere Brom, unter Bildung eines Phosphonigsäureester-halogenids der Formel (II) umsetzt 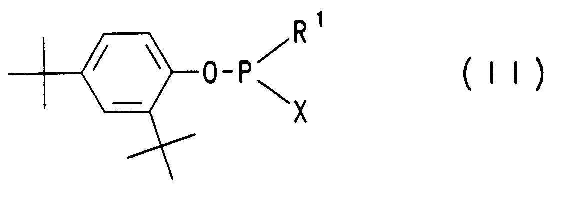 und anschließend in einem zweiten Schritt die Verbindung der Formel (II) mit einer Grignard-Verbindung der Formel R²-MgX im molaren Verhältnis von 0,8 : 1 bis 1,2 : 1, vorzugsweise 1 : 1, umsetzt, wobei R² eine der vorstehend genannten, aber von R¹ verschiedenen Bedeutungen hat, oder
b) im Falle, daß R¹ und R² die gleiche Bedeutung haben, Phosphorigsäure-2,4-di-tert.-butylphenylester-dihalogenid mit einer Grignard-Verbindung R¹-MgX im molaren Verhältnis von 0,8 : 2 bis 1,2 : 2, vorzugsweise 1 : 2, umsetzt.

7. Verfahren nach Anspruch 6, dadurch gekennzeichnet, daß zur Herstellung einer Verbindung der Formel (II) die Grignard-Verbindung R¹-MgX in Lösung oder in Suspension der Lösung des Phosphorigsäure-2,4-di-tert.-butylphenylester-dihalogenids portionsweise in kleinen Mengen oder kontinuierlich zugegeben wird.

8. Verfahren nach Anspruch 6, dadurch gekennzeichnet, daß zur Herstellung einer Verbindung der Formel (I), worin R¹ und R² die in Anspruch 1 genannten Bedeutungen außer primären Alkylgruppen haben, in Variante b) das Phosphorigsäure-2,4-di-tert.-butylphenylester-dihalogenid oder im zweiten Schritt der Variante a) die Verbindung der Formel (II) zur Lösung oder Suspension der jeweiligen Grignard-Verbindung portionsweise in kleinen Mengen oder kontinuierlich zugegeben wird.

9. Verwendung einer Verbindung der Formel (I) nach mindestens einem der Ansprüche 1 bis 5 zur Herstellung von sekundären Phosphanoxiden.

## Claims

1. A compound of the formula (I) 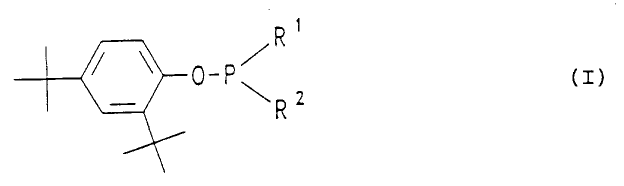 in which R¹ and R², independently of one another, are each a branched, unbranched or cyclic alkyl radical having 1 to 20 carbon atoms, or
R¹ is one of the alkyl radicals defined above and
R² is a phenyl or naphthyl radical, each of which can be unsubstituted or carry 1 to 5 substituents, the substituents being identical or different and a non-aromatic C₁-C₁₂-hydrocarbon radical, a C₁-C₁₂-alkoxy radical, C₁-C₁₂-alkylthio radical, di-C₁-C₁₂-alkylamino radical or an aryl radical or aryloxy radical each having 6 to 12 carbon atoms.

2. A compound as claimed in claim 1, wherein
R¹ and R², independently of one another, are each a branched or unbranched alkyl radical having 1 to 10, preferably 2 to 6, carbon atoms or a cyclic alkyl radical having 6 to 12, preferably 6 to 7, carbon atoms.

3. A compound as claimed in claim 1, wherein
R¹ is a branched or unbranched alkyl radical having 1 to 10, preferably 2 to 6, carbon atoms or a cyclic alkyl radical having 6 to 12, preferably 6 to 7, carbon atoms and
R² is a phenyl radical which is substituted by 1 to 3 C₁-C₈-alkyl radicals, C₁-C₈-alkoxy radicals, C₁-C₈-alkylthio radicals, di-C₁-C₈-alkylamino radicals, phenyl radicals or phenoxy radicals, an unsubstituted naphthyl radical or a naphthyl radical which is substituted by 1 to 3 C₁-C₈-alkyl radicals, C₁-C₈-alkoxy radicals, C₁-C₈-alkylthio radicals, di-C₁-C₈-alkylthio radicals, di-C₁-C₈-alkylamino radicals, phenyl radicals or phenoxy radicals.

4. A compound as claimed in claim 1 or 2, wherein R¹ and R², independently of one another, are each methyl, ethyl, propyl, butyl or cyclohexyl.

5. A compound as claimed in claim 1 or 3, wherein
R¹ is methyl, ethyl, propyl, butyl or cyclohexyl and
R² is a tolyl, xylyl, mesityl, 2,4,5-trimethylphenyl, 2,4,6-tri-tert.-butylphenyl, 2,4-di-tert.-octylphenyl, biphenyl, naphthyl, methylnaphthyl, dimethylnaphthyl or trimethylnaphthyl radical.

6. A process for the preparation of a compound of the formula (I) as claimed in at least one of claims 1 to 5, which comprises
a) in the case where R¹ and R² are different from one another, first reacting, in a first step, a 2,4-di-tert.-butylphenylphosphonous dihalide with a Grignard compound of the formula R¹-MgX in a molar ratio of 0.8:1 to 1.2:1, preferably 1:1, R¹ having the abovementioned meanings, halide being chloride or bromide and X being a halogen having an atomic weight of at least 35, preferably chlorine or bromine, in particular bromine, to give a halophosphonous ester of the formula (II) 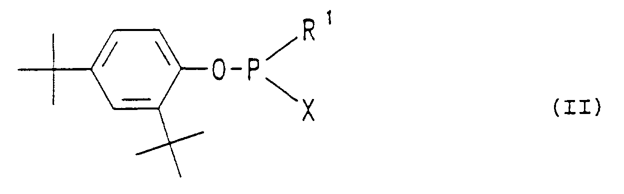 and then reacting, in a second step, the compound of the formula (II) with a Grignard compound of the formula R²-MgX in a molar ratio of 0.8:1 to 1.2:1, preferably 1:1, R² having one of the abovementioned meanings other than R¹, or
b) in the case where R¹ and R² have the same meaning, reacting a 2,4-di-tert.-butylphenylphosphonous dihalide with a Grignard compound R¹-MgX in a molar ratio of 0.8:2 to 1.2:2, preferably 1:2.

7. The process as claimed in claim 6, wherein, for preparing a compound of the formula (II), the Grignard compound R¹-MgX is added in solution or in suspension to the solution of the 2,4-di-tert.-butylphenylphosphonous dihalide in small portions or continuously.

8. The process as claimed in claim 6, wherein, for preparing a compound of the formula (I) in which R¹ and R² have the meanings mentioned in claim 1 with the exception of primary alkyl groups, the 2,4-di-tert.-butylphenyl- phosphonous dihalide in variant b) or the compound of the formula (II) in the second step of variant a) is added to the solution or suspension of the particular Grignard compound in small portions or continuously.

9. The use of a compound of the formula (I) as claimed in at least one of claims 1 to 5 for the preparation of secondary phosphine oxides.

## Revendications

1. Composé de formule (I) 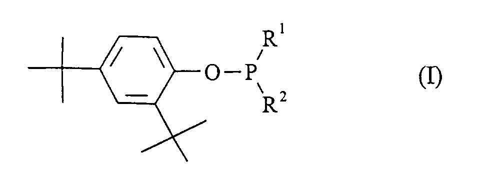 dans laquelle R¹ et R² représentent chacun, indépendamment l'un de l'autre, un reste alkyle linéaire, ramifié ou cyclique de 1 à 20 atomes de carbone, ou R¹ est l'un des restes alkyle définis ci-dessus et R² représente un reste phényle ou naphtyle, non substitué ou portant 1 à 5 substituants, les substituants étant identiques ou différents et étant des restes hydrocarbonés non aromatiques en C₁-C₁₂, alcoxy en C₁-C₁₂, alkylthio en C₁-C₁₂, di(alkyl en C₁-C₁₂)amino ou aryle ou aryloxy de 6 à 12 atomes de carbone.

2. Composé selon la revendication 1, caractérisé en ce que R¹ et R² représentent chacun, indépendamment l'un de l'autre, un reste alkyle linéaire ou ramifié de 1 à 10, de préférence 2 à 6, atomes de carbone, ou un reste alkyle cyclique de 6 à 12, de préférence 6 à 7, atomes de carbone.

3. Composé selon la revendication 1, caractérisé en ce que
R¹ est un reste linéaire ou ramifié de 1 à 10, de préférence 2 à 6, atomes de carbone, ou un reste alkyle cyclique de 6 à 12, de préférence 6 à 7, atomes de carbone, et
R² est un reste phényle substitué par 1 à 3 restes alkyle en C₁-C₈, alcoxy en C₁-C₈, alkylthio en C₁-C₈, di(alkyl en C₁-C₈)amino, phényle ou phénoxy, un reste naphtyle non substitué ou un reste naphtyle substitué par 1 à 3 restes alkyle en C₁-C₈, alcoxy en C₁-C₈, alkylthio en C₁-C₈, di(alkyl en C₁-C₈)amino, phényle ou phénoxy.

4. Composé selon la revendication 1 ou 2, caractérisé en ce que R¹ et R² représentent chacun, indépendamment l'un de l'autre, un reste méthyle, éthyle, propyle, butyle ou cyclohexyle.

5. Composé selon la revendication 1 ou 3, caractérisé en ce que
R¹ est un reste méthyle, éthyle, propyle, butyle ou cyclohexyle et
R² est un reste tolyle, xylyle, mésityle, 2,4,5-triméthylphényle, 2,4,6-tri-tert-butylphényle, 2,4-di-tert-octylphényle, biphényle, naphtyle, méthylnaphtyle, diméthylnaphtyle ou triméthylnaphtyle.

6. Procédé de préparation d'un composé de formule (I) selon l'une au moins des revendications 1 à 5, caractérisé en ce que
a) dans le cas où R¹ et R² sont différents l'un de l'autre, on fait réagir d'abord, dans une première étape, un dihalogénure d'ester de 2,4-di-t-butylphényle d'acide phosphoreux avec un composé de Grignard de formule R¹-MgX dans un rapport molaire compris entre 0,8:1 et 1,2:1, de préférence de 1:1, où R¹ a la signification donnée précédemment, l'halogénure représente un chlorure ou un bromure et X est un halogène de masse atomique d'au moins 35, de préférence le chlore ou le brome, en particulier le brome, en formant un halogénure d'ester d'acide phosphoneux de formule (I) 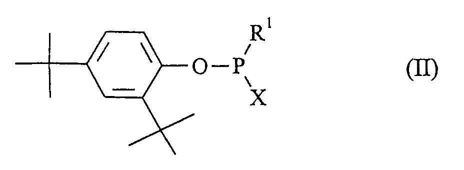 puis, dans une seconde étape, on fait réagir le composé de formule (I) avec un composé de Grignard de formule R²-MgX dans un rapport molaire compris entre 0,8:1 et 1,2:1, de préférence de 1:1, où R² a l'une des significations données précédemment, mais différente de R¹, ou
b) dans le cas où R¹ et R² ont la même signification, on fait réagir un dihalogénure d'ester de 2,4-di-t-butylphényle d'acide phosphoreux avec un composé de Grignard de formule R¹-MgX dans un rapport molaire compris entre 0,8:2 et 1,2:2, de préférence de 1:2.

7. Procédé selon la revendication 6, caractérisé en ce que, pour préparer un composé de formule (II), on ajoute par petites portions ou de façon continue le composé de Grignard R¹-MgX en solution ou en suspension à la solution du dihalogénure d'ester de 2,4-di-t-butylphényle d'acide phosphoreux.

8. Procédé selon la revendication 6, caractérisé en ce que, pour préparer un composé de formule (I) dans lequel R¹ et R² ont les significations données dans la revendication 1, à l'exception de groupes alkyle primaires, on ajoute par petites portions ou de façon continue le dihalogénure d'ester de 2,4-di-t-butylphényle d'acide phosphoreux dans la variante b), ou le composé de formule (II) dans la seconde étape de la variante a), à la solution ou la suspension du composé de Grignard correspondant.

9. Utilisation d'un composé de formule (I) selon l'une au moins des revendications 1 à 5 pour la préparation d'oxydes de phosphines secondaires.
